# EUROPÄISCHE PATENTSCHRIFT

(11) **EP 1 632 017 B1**
(45) Veröffentlichungstag und Bekanntmachung des Hinweises auf die Patenterteilung: **26.03.2008**
(21) Anmeldenummer: 04730503.2
(22) Anmeldetag: 30.04.2004
(51) Int. Cl.: H02P 7/00

(54) **STEUEREINRICHTUNG**
CONTROL DEVICE
DISPOSITIF DE COMMANDE

(30) Priorität: 06.06.2003 DE 20308840 U
(43) Veröffentlichungstag der Anmeldung: 08.03.2006
(73) Patentinhaber: Elero GmbH, 72660 Beuren (DE)
(72) Erfinder: WALDDÖRFER, Dieter, 73252 Lenningen (DE)
(74) Vertreter: Ruckh, Rainer Gerhard
(86) Internationale Anmeldenummer: PCT/EP2004/004582
(87) Internationale Veröffentlichungsnummer: WO 2004/109903

(56) Entgegenhaltungen:
- EP-A- 1 186 741
- US-A- 3 993 940
- US-A- 4 745 347
- US-A- 4 853 605
- US-A- 5 539 295

## Beschreibung

Die Erfindung betrifft eine Steuereinrichtung gemäß dem Oberbegriff des Anspruchs 1.

Eine derartige Steuereinrichtung ist aus der EP 1 186 741 A2 bekannt. Diese Steuereinrichtung dient zur Steuerung eines AC-Jalousiemotors oder dergleichen, dessen Laufrichtung von außen vorgegeben wird, indem eine Wechselspannung über eine Leitung entweder an eine erste oder eine zweite Wicklung des AC-Jalousiemotors angelegt wird. Zum Ein- beziehungsweise Ausschalten des AC-Jalousiemotors ist ein Schalter vorgesehen, der insbesondere von einem Triac gebildet ist.

Mit dieser Steuereinrichtung soll ein sicheres Abschalten an den Endpositionen des AC-Jalousiemotors ohne zusätzliche mechanische Endschalter gewährleistet werden. Weiterhin darf der AC-Jalousiemotor nicht in Auf-Richtung gestartet werden, wenn er sich bereits in der oberen Endposition befindet. Dasselbe gilt sinngemäß für den in der unteren Endposition befindlichen AC-Jalousiemotor. In diesem Fall darf dieser nicht gestartet werden, wenn die Wechselspannung an der Leitung für die Abwärtsbewegung anliegt.

Der AC-Jalousiemotor dreht sich erst dann in Auf- oder Abwärts-Richtung, wenn der Schalter bildende Triac dauerhaft gezündet wird.

Zur Drehrichtungserkennung des AC-Jalousiemotors ist es wichtig zu erkennen, an welche der Leitungen die Wechselspannung angeschlossen wurde.

In Ruhestand des AC- Jalousie motors liegt die Wechselspannung am einer der beiden Leitugen, jedoch ist der Triac nicht gezündet. Da die Wicklungen des AC-Jalousiemotors über den Motorkondensator gekoppelt sind, liegt die Wechselspannung phasengleich an beiden Wicklungen.

Die Drehrichtungserkennung des AC-Jalousiemotors im Ruhezustand erfolgt bei an einer der Leitungen anliegenden Wechselspannung derart, dass der Triac nur kurzzeitig gezündet wird. Damit geht ein kurzer energiearmer Impuls zum Motor, der noch nicht zur Erzeugung einer Drehbewegung ausreicht. Jedoch wird durch diesen Impuls kurzzeitig eine Phasendifferenz der Spannungen an den beiden Wicklungen induziert. Aus dieser Phasendifferenz kann die Drehrichtung des AC-Jalousiemotors ermittelt werden.

Nachteilig hierbei ist, dass zur Drehrichtungserkennung der Triac kurzzeitig gezündet werden muss, wobei die Zeit, über welche der Triac gezündet ist, exakt vorgegeben werden muss, damit dieser nicht zu einem Einschalten des AC-Jalousiemotors führt. Dies bedingt einen unerwünschten Schaltungsaufwand für die Drehrichtungserkennung.

Weiterhin ist nachteilig, dass mit dieser Steuereinrichtung nur kurzzeitig während des Ruhezustands des AC-Jalousiemotors eine Drehrichtungserkennung durchführbar ist.

Aus der US 4,745,347 ist ein Wechselstrommotor mit einer Hauptwicklung und einer Hilfswicklung bekannt. Der Motor wird über einen Start-Schalter eingeschaltet. Mittels eines zweiten Schalters erfolgt die Umschaltung der Drehrichtung. Zur Drehrichtungserkennung bei eingeschalteten Motor werden die Spannungen in beiden Wicklungen mit jeweils einem Komparator verglichen. Die Ausgangspulse am Ausgang des Komparators für die Hauptwicklung sowie die differenzierten Ausgangspulse am Ausgang des Komparators für die Hilfswicklung werden mittels eines dritten Komparators bewertet.

Der Erfindung liegt die Aufgabe zugrunde, eine Steuereinrichtung der eingangs genannten Art so auszubilden, dass mit dieser eine zuverlässige, fortlaufende Drehrichtungserkennung eines Wechselstrommotors durchführbar ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Steuereinrichtung eines in zwei Laufrichtungen betreibbaren Wechselstrommotors für ein Stellsystem weist einen Schalter zum Ein-oder Ausschalten des Wechselstrommotors auf. Eine Laufrichtung ist vorgebbar, indem eine Netzspannung entweder eine an eine erste oder eine zweite Wicklung des Wechselstrommotors angelegt wird. Jeder Wicklung ist ein Schaltungsmodul mit einer vorgegebenen Grundlast zugeordnet. Die Spannung an einer ersten Wicklung, an der die Netzspannung anliegt, ist phasengleich zu dieser Netzspannung. Der Spannung an der zweiten Wicklung ist eine von dem Schaltungsmodul abhängige Phasendifferenz bezüglich der Spannung an der ersten Wicklung aufgeprägt, falls an die zweite Wicklung die Netzspannung nicht angelegt ist. In einer Auswerteeinheit wird aus der Phasendifferenz der Spannungen an beiden Wicklungen die Laufrichtung des Wechselstrommotors ermittelt.

Der Grundgedanke der Erfindung besteht darin, dass durch die den Wicklungen zugeordneten Schaltungsmodulen bei Anlegen einer Netzspannung in Form einer Wechselspannung an eine der Wicklungen eine Phasendifferenz dieser Wechselspannung zu der Spannung an der zweiten Wicklung entsteht, anhand derer die Laufrichtung des Wechselstrommotors fortlaufend ermittelbar ist.

Die Schaltungsmodule weisen dabei vorzugsweise jeweils ein kapazitives Schaltungselement auf, durch welches die Phasenverschiebung bewirkt wird. In einer besonders einfachen und kostengünstigen Ausführungsform besteht jedes Schaltungsmodul aus einem Netzteilkondensator sowie wenigstens einem Widerstand.

Bei Anlegen der Netzspannung an eine der Wicklungen wird die Phase der Netzspannung der Spannung an dieser Wicklung aufgeprägt. Durch die Grundlast des Schaltungsmoduls an der anderen Wicklung ist die Spannung an dieser Wicklung jedoch gegenüber der Netzspannung phasenverschoben.

Ein wesentlicher Vorteil der Erfindung besteht darin, dass bei an einer Wicklung angelegten Netzspannung fortdauernd eine Phasendifferenz der Spannungen an den beiden Wicklungen erhalten wird, und zwar unabhängig davon, ob der den Schalter bildende Triac gezündet ist oder nicht.

Damit wird eine fortlaufende, reproduzierbare Bestimmung der Laufrichtung des Wechselstrommotors ermöglicht. Insbesondere ist eine Laufrichtungsbestimmung sowohl im Ruhezustand des Wechselstrommotors, das heißt bei nicht gezündetem Triac, als auch während des Laufs des Wechselstrommotors möglich.

Weiterhin kann mit der erfindungsgemäßen Steuereinrichtung auch der Zustand erfasst werden, in welchem beide Wicklungen an die Netzspannung angeschlossen sind. In diesem Fall sind die Spannungen an den Wicklungen des Wechselstrommotors phasengleich. In dieser Beschaltung können beispielsweise Parameterwerte des Wechselstrommotors geändert oder insbesondere gelöscht werden. Durch die in der Auswerteeinheit durchgeführte Analyse des Vorzeichens der Phasendifferenz kann dieser Zustand von den beiden unterschiedlichen Laufrichtungen des Wechselstrommotors eindeutig unterschieden werden.

Die erfindungsgemäße Steuereinrichtung kann generell für Stellsysteme wie zum Beispiel Rollläden, Markisen, Rolltore, Jalousien, Innenrollos oder Screens eingesetzt werden.

Mit der erfindungsgemäßen Steuereinrichtung kann im Ruhezustand des Wechselstrommotors, das heißt bei noch stillstehendem Stellsystem die Laufrichtung des Wechselstrommotors erfasst werden.

Weiterhin kann mit der erfindungsgemäßen Steuereinrichtung auch eine vom Benutzer während des Laufs des Stellsystems vorgenommene Laufrichtungsumschaltung des Stellsystems sofort erkannt und gemeldet werden. Zweckmäßigerweise wird in der Auswerteeinheit bei einer derartigen Direktumschaltung das Stellsystem zunächst gestoppt, so dass dann der Benutzer mit einem weiteren Eingabebefehl das Stellsystem neu startet. Dadurch wird ein kontrollierter Neuanlauf des Stellsystems, aus welchem heraus die jeweilige Endposition sicher angefahren werden kann, gewährleistet.

Die Erfindung wird im Nachstehenden anhand der Zeichnungen erläutert. Es zeigen:
- Figur 1:: Schematische Darstellung einer Steuereinrichtung eines Wechselstrommotors für ein Stellsystem.
- Figur 2:: Phasenverlauf der Spannungen an den Wicklungen des Wechselstrommotors für eine erste Laufrichtung des Wechselstrommotors.
- Figur 3:: Phasenverlauf der Spannungen an den Wicklungen des Wechselstrommotors für eine zweite Laufrichtung des Wechselstrommotors.

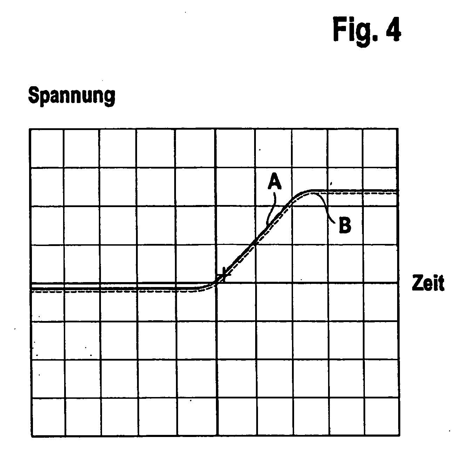

- Figur 4:: Phasenverlauf der Spannungen an den Wicklungen des Wechselstrommotors bei gleichzeitig an beiden Wicklungen anliegender Netzspannung.

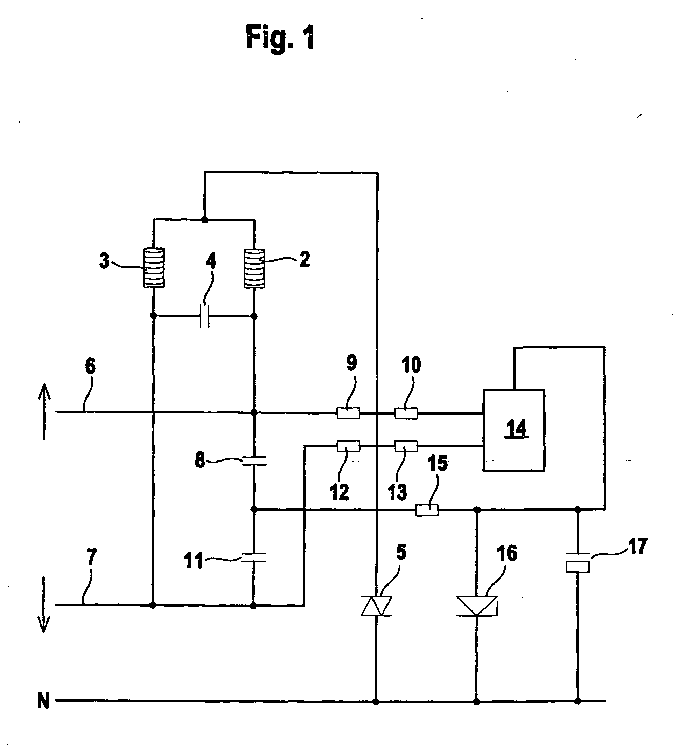

Figur 1 zeigt schematisch ein Ausführungsbeispiel einer Steuereinrichtung 1 eines Wechselstrommotors für ein nicht gesondert dargestelltes Stellsystem. Das Stellsystem kann insbesondere von einem Rollladen, einer Markise, einem Rolltor, einer Jalousie, einem Innenrollo oder einem Screen gebildet sein.

Generell kann das Stellsystem zwischen einer oberen und unteren Endposition verfahren werden. Zur Durchführung der Aufwärts- und Abwärtsbewegung des Stellsystems wird der Wechselstrommotor in zwei unterschiedlichen Laufrichtungen betrieben.

Wie aus Figur 1 ersichtlich weist der Wechselstrommotor zwei Wicklungen 2, 3 auf, die über einen Motorkondensator 4 gekoppelt sind. Die Wicklungen 2, 3 des Wechselstrommotors sind identisch ausgebildet.

Zwischen den Wicklungen 2, 3 des Wechselstrommotors und einem Nullleiter N ist ein Schalter angeordnet, der im vorliegenden Fall von einem Triac 5 gebildet ist. Anstelle eines Triacs 5 ist prinzipiell auch ein Leistungstransistor oder dergleichen einsetzbar.

Jeweils eine Leitung 6, 7 ist auf eine der Wicklungen 2, 3 des Wechselstrommotors geführt. Zur Vorgabe der Laufrichtung des Wechselstrommotors wird an eine der beiden Leitungen 6, 7 eine Netzspannung in Form einer Wechselspannung angelegt. Wie in Figur 1 schematisch dargestellt, wird durch Anlegen der Netzspannung an die erste Leitung 6 eine erste Laufrichtung des Wechselstrommotors vorgegeben, mit welcher eine Aufwärtsbewegung des Stellsystems durchgeführt wird. Entsprechend wird bei der an der zweiten Leitung 7 anliegenden Netzspannung eine Abwärtsbewegung des Stellsystems generiert.

Bei abgetrenntem Nullleiter N ist der Triac 5 nicht gezündet, so dass sich der Wechselstrommotor im Ruhezustand befindet. Wird der Triac 5 gezündet, so dreht sich der Wechselstrommotor in der Laufrichtung, die durch das Anlegen der Netzspannung an eine der Leitungen 6, 7 vorgegeben ist.

Jeder Wicklung 2, 3 des Wechselstrommotors ist ein Schaltungsmodul zugeordnet. Die Schaltungsmodule weisen einen identischen Aufbau auf. Das erste Schaltungsmodul, welches an die erste Wicklung 2 angeschlossen ist, besteht aus einem Netzteilkondensator 8 und zwei in Reihe geschalteten Widerständen 9, 10. Entsprechend weist auch das zweite Schaltungsmodul einen Netzteilkondensator 11 und zwei in Reihe geschaltete Widerstände 12, 13 auf.

Die Wicklungen 2, 3 und die zugeordneten Schaltungsmodule bilden zwei symmetrische Schaltungszweige, an welche der Triac 5 sowie eine Auswerteeinheit angeschlossen sind. Die Auswerteeinheit besteht im vorliegenden Fall aus einem Microcontroller 14. Jeweils von einem Widerstand 10, 13 eines Schaltungsmoduls ist eine Zuleitung auf jeweils einen Eingang des Microcontrollers 14 geführt.

Die Schaltungsmodule sind über einen weiteren Widerstand 15 sowie eine Zenerdiode 16 und einen gepolten Kondensator 17 in symmetrischer Weise an den Nullleiter N angeschlossen, wobei die Zenerdiode 16 zur Spannungsbegrenzung dient.

In dem Microcontroller 14 sind Parameterwerte zur Steuerung des Wechselstrommotors und damit des Stellsystems gespeichert. Hierzu gehören insbesondere Positionswerte wie die obere und untere Endposition des Stellsystems.

Der Microcontroller 14 übernimmt somit eine Kontroll- und Steuerfunktion für den Wechselstrommotor. Insbesondere wird in dem Microcontroller 14 die Laufrichtung des Wechselstrommotors fortlaufend erfasst.

Zur Ermittlung der Laufrichtung wird in dem Microcontroller 14 die Phasendifferenz der an den Wicklungen 2, 3 des Wechselstrommotors anliegenden Spannungen bestimmt.

Zur Durchführung einer Aufwärtsbewegung des Stellsystems wird die Netzspannung nur an die Leitung 6 der Steuereinrichtung 1 gemäß Figur 1 angeschlossen.

Die Phase der Netzspannung wird der Spannung an der Wicklung 2 des Wechselstrommotors, welche an die Leitung 6 unmittelbar angeschlossen ist, aufgeprägt. Dies bedeutet, dass die Spannung an der Wicklung 2 phasengleich mit der Netzspannung ist.

Obwohl die zweite Wicklung 3 des Wechselstrommotors über den Motorkondensator 4 an die erste Wicklung 2 gekoppelt ist, ist die Spannung an der Wicklung 3 bezüglich der Spannung an der Wicklung 2 phasenverschoben.

Diese Phasenverschiebung ist dadurch bedingt, dass das der Wicklung 3 zugeordnete Schaltungsmodul eine definierte Grundlast bildet. Im vorliegenden Fall ist der Netzteilkondensator 11 des Schaltungsmoduls das die Grundlast im Wesentlichen bestimmende Element. Durch dieses kapazitive Element wird die Phase der Spannung an der Wicklung 3 derart beeinflusst, dass diese der Phase an der Wicklung 2 um einen definierten Betrag nachläuft.

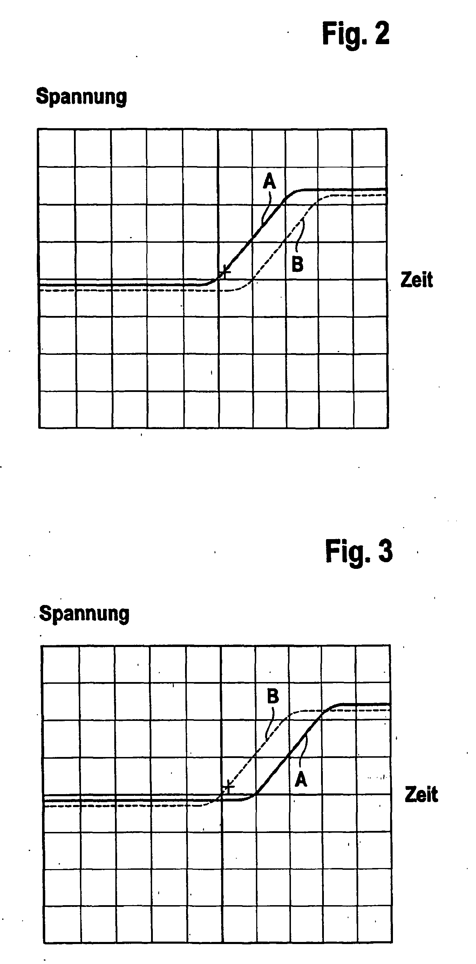

Der Phasenverlauf der Spannungen an den Wicklungen 2 und 3 bei allein an der Leitung 6 anliegender Netzspannung ist in Figur 2 veranschaulicht. Dort ist mit der Bezugsziffer A die an der Wicklung 2 anliegende Spannung bezeichnet, die phasengleich mit der an der Leitung 6 anliegenden Netzspannung ist. Mit der Bezugsziffer B ist die an der Wicklung 3 anliegende Spannung bezeichnet. Zur Ermittlung der Laufrichtung des Wechselstrommotors wird die Phasendifferenz der Spannungen an den Wicklungen 2, 3 in dem Microcontroller 14 ausgewertet.

Zur Durchführung einer Abwärtsbewegung des Schließsystems 1 wird die Netzspannung nur an die Leitung 7 der Steuereinrichtung 1 gemäß Figur 1 angeschlossen.

In diesem Fall wird die Phase der Netzspannung der Spannung an der Wicklung 3 aufgeprägt, so dass diese phasengleich mit der Netzspannung ist.

Demgegenüber ist die Spannung an der Wicklung 2 gegenüber der Netzspannung und damit gegenüber der Spannung an der Wicklung 3 phasenverschoben.

Diese Phasenverschiebung wird durch das der Wicklung 2 zugeordnete Schaltungsmodul, insbesondere durch den Netzteilkondensator 8 des Schaltungsmoduls bewirkt.

Der Phasenverlauf der Spannungen an den Wicklungen 2 und 3 bei allein an der Leitung 7 anliegender Netzspannung ist in Figur 3 veranschaulicht Die Bezeichnungen sind entsprechend der Figur 2 gewählt, das heißt die Bezugsziffer A kennzeichnet die Spannung an der Wicklung 2, die Bezugsziffer B kennzeichnet die Spannung an der Wicklung 3.

Da die Schaltungsmodule, welche den beiden Wicklungen 2 und 3 zugeordnet sind, identisch ausgebildet sind, sind die Beträge der Phasenverschiebungen der Spannungen an den Wicklungen 2 und 3 für die in den Figuren 2 und 3 dargestellten Fälle identisch. Die Phasenverschiebungen unterscheiden sich lediglich in ihrem Vorzeichen, das heißt im Gegensatz zu dem in Figur 2 dargestellten Fall läuft bei dem in Figur 3 dargestellten Fall die Phase des Signals A gegenüber der Phase des Signals B nach.

In dem Microcontroller 14 erfolgt eine Generierung eines Überwachungssignals, indem das Vorzeichen der Phasenverschiebungen der Signale A und B ausgewertet wird.

Je nach Vorzeichen der Phasenverschiebung signalisieren zwei Signalzustände des Überwachungssignals die unterschiedlichen Laufrichtungen des Wechselstrommotors. Für den in Figur 2 dargestellten Fall nimmt das Überwachungssignal einen Signalzustand ein, welcher der Aufwärtsbewegung des Stellsystems entspricht. Für den in Figur 3 dargestellten Fall nimmt das Überwachungssignal einen Signalzustand ein, welcher der Abwärtsbewegung des Stellsystems entspricht.

Schließlich kann das Überwachungssignal einen dritten Signalzustand einnehmen, der dem Wert Null der Phasenverschiebung zwischen den Spannungen an beiden Wicklungen 2, 3 entspricht.

Dieser Signalzustand wird dann erhalten, wenn gleichzeitig an beide Leitungen 6, 7 die Netzspannung angelegt wird. In diesem Fall wird den Spannungen an beiden Wicklungen 2, 3 die Phase der Netzspannung aufgeprägt, so dass diese gleichphasig sind.

Der dabei erhaltene Signalzustand des Überwachungssignals versetzt die Steuereinrichtung 1 in einen Parametriermodus, in dem allgemein Parameterwerte geändert werden können. Im vorliegenden Fall werden Positionswerte des Wechselstrommotors, insbesondere die anzufahrenden Endpositionen, gelöscht. Das Löschen der Parameterwerte wird vorzugsweise mit einem akustischen Signal quittiert.

Die Bestimmung der Phasendifferenz der Spannungen an den beiden Wicklungen 2, 3 und damit die Generierung der Signalzustände des Überwachungssignals erfolgt kontinuierlich fortlaufend. Dabei erfolgt die Bestimmung der Phasendifferenzen insbesondere auch unabhängig davon, ob der Triac 5 gezündet ist oder nicht.

Somit kann einerseits vor Anlauf des Wechselstrommotors, das heißt vor Zünden des Tricas die Phasendifferenz und damit die durch Anlegen der Netzspannung an eine der Leitungen 6 oder 7 vorgegebene Laufrichtung des Wechselstrommotors ermittelt werden.

Andererseits wird auch während des Laufs des Wechselstrommotors die Laufrichtung des Wechselstrommotors fortlaufend überwacht. Damit kann insbesondere unmittelbar festgestellt werden, wenn der Benutzer durch eine externe Signaleingabe während des Laufs des Wechselstrommotors eine Direktumschaltung vornimmt, das heißt die Laufrichtung des Wechselstrommotors abrupt ändert.

Durch die fortlaufende Messung der Phasendifferenz der Spannungen an den Wicklungen 2 und 3 wird diese Direktumschaltung unmittelbar im Microcontroller 14 erfasst, so dass über diesen geeignete Maßnahmen eingeleitet werden. Vorzugsweise wird bei einer derartigen Direktumschaltung der Wechselstrommotor zunächst gestoppt, worauf der Benutzer mit einer zweiten Signaleingabe einen Neustart vornehmen kann. Durch diesen kontrollierten Neustart wird dann gewährleistet, dass der Wechselstrommotor entsprechend der vorgegebenen Laufrichtung des Wechselstrommotors in seine Endposition läuft.

### Bezugszeichenliste

- (1): Steuereinrichtung
- (2): Wicklung
- (3): Wicklung
- (4): Motorkondensator
- (5): Triac
- (6): Leitung
- (7): Leitung
- (8): Netzteilkondensator
- (9): Widerstand
- (10): Widerstand
- (11): Netzteilkondensator
- (12): Widerstand
- (13): Widerstand
- (14): Microcontroller
- (15): Widerstand
- (16): Zenerdiode
- (17): Kondensator

- A: Spannung an Wicklung 2
- B: Spannung an Wicklung 3
- N: Nullleiter

## Patentansprüche

1. Steuereinrichtung eines in zwei Laufrichtungen betreibbaren Wechselstrommotors für ein Stellsystem, mit einem Schalter zum Ein- oder Ausschalten des Wechselstrommotors, wobei eine Laufrichtung vorgebbar ist, indem eine Netzspannung entweder eine an eine erste oder eine zweite Wicklung des Wechselstrommotors angelegt ist, **dadurch gekennzeichnet, dass** jeder Wicklung (2, 3) ein Schaltungsmodul mit einer vorgegebenen Grundlast zugeordnet ist, wobei die Spannung an einer ersten Wicklung (2), an der die Netzspannung anliegt, phasengleich zu dieser Netzspannung ist, und wobei der Spannung an der zweiten Wicklung (3) eine von dem Schaltungsmodul abhängige Phasendifferenz bezüglich der Spannung an der ersten Wicklung (2) aufgeprägt ist, falls an die zweite Wicklung (3) die Netzspannung nicht angelegt ist, und dass in einer Auswerteeinheit aus der Phasendifferenz der Spannungen an beiden Wicklungen (2, 3) die Laufrichtung des Wechselstrommotors unabhängig davon, ob der Schalter gezündet ist oder nicht, ermittelt wird.

2. Steuereinrichtung nach Anspruch 1, **dadurch gekennzeichnet, dass** die beiden Wicklungen (2, 3) des Wechselstrommotors identisch ausgebildet sind.

3. Steuereinrichtung nach einem der Ansprüche 1 oder 2, **dadurch gekennzeichnet, dass** die den Wicklungen (2, 3) zugeordneten Schaltungsmodule identisch ausgebildet sind.

4. Steuereinrichtung nach einem der Ansprüche 1-3, **dadurch gekennzeichnet, dass** jedes Schaltungsmodul einen Netzteilkondensator (8, 11) aufweist.

5. Steuereinrichtung nach Anspruch 4, **dadurch gekennzeichnet, dass** jedes Schaltungsmodul wenigstens einen dem Netzteilkondensator (8, 11) zugeordneten Widerstand (9-13) aufweist.

6. Steuereinrichtung nach einem der Ansprüche 1-5, **dadurch gekennzeichnet, dass** die Wicklungen (2, 3) mit den Schaltungsmodulen zwei symmetrische Schaltungszweige bilden, an welche die Auswerteeinheit und der Schalter angeschlossen sind.

7. Steuereinrichtung nach Anspruch 6, **dadurch gekennzeichnet, dass** jeder Schaltungszweig eine Leitung (6, 7) zum Anschluss der Netzspannung aufweist.

8. Steuereinrichtung nach einem der Ansprüche 1 - 7, **dadurch gekennzeichnet, dass** der Schalter von einem Triac (5) gebildet ist.

9. Steuereinrichtung nach einem der Ansprüche 1-8, **dadurch gekennzeichnet, dass** die Auswerteeinheit von einem Microcontroller (14) gebildet ist.

10. Steuereinrichtung nach Anspruch 9, **dadurch gekennzeichnet, dass** von jeweils einem Widerstand (10, 13) eines Schaltungsmoduls eine Zuleitung auf einen Eingang des Microcontrollers (14) geführt ist.

11. Steuereinrichtung nach einem der Ansprüche 1 - 10, **dadurch gekennzeichnet, dass** an beide Wicklungen (2, 3) des Wechselstrommotors die Netzspannung gleichzeitig anlegbar ist, so dass die Spannungen an den Wicklungen (2, 3) phasengleich sind.

12. Steuereinrichtung nach Anspruch 11, **dadurch gekennzeichnet, dass** bei gleichzeitig an den Wicklungen (2, 3) anliegender Netzspannung Parameterwerte des Wechselstrommotors veränderbar sind.

13. Steuereinrichtung nach Anspruch 12, **dadurch gekennzeichnet, dass** bei gleichzeitig an den Wicklungen (2, 3) anliegender Netzspannung Parameterwerte des Wechselstrommotors gelöscht werden.

14. Steuereinrichtung nach einem der Ansprüche 1 - 13, **dadurch gekennzeichnet, dass** in der Auswerteeinheit aus dem Vorzeichen der Phasendifferenz der Spannungen an beiden Wicklungen (2, 3) unterschiedliche Zustände eines Überwachungssignales abgeleitet werden.

15. Steuereinrichtung nach einem der Ansprüche 1 - 14, **dadurch gekennzeichnet, dass** das Stellsystem von einem Rollladen, einer Markise, einem Rolltor, einer Jalousie, einem Innenrollo oder einem Screen gebildet ist.

## Claims

1. Control device of an alternating current motor, which is operable in two directions of running, for a setting system, with a switch for switching the alternating current motor on and off, wherein a direction of running is predeterminable in that a mains voltage is applied to either a first or a second winding of the alternating current motor, **characterised in that** a switching module with a predetermined base load is associated with each winding (2, 3), wherein the voltage at a first winding (2) to which the mains voltage is applied has the same phase as this mains voltage and wherein a phase difference, which is dependent on the switching module, with respect to the voltage at the first winding (2) is imposed on the voltage at the second winding (3) if the mains voltage is multiplied to the second winding (3) and the direction of running of the alternating current motor is determined in an evaluating unit from this phase difference of the voltages at the two windings (2, 3) regardless of whether or not the switch is triggered.

2. Control device according to claim 1, **characterised in that** the two windings (2, 3) of the alternating current motor are of identical construction.

3. Control device according to claim 1 or 2, **characterised in that** the switching modules associated with the windings (2, 3) are identical.

4. Control device according to one of claims 1 to 3, **characterised in that** each switching module has a mains power supply capacitor (8, 11).

5. Control device according to claim 4, **characterised in that** each switching module has at least one resistor (9 to 13) associated with the mains power supply capacitor (8, 11).

6. Control device according to one of claims 1 to 5, **characterised in that** the windings (2, 3) form together with the switching modules two symmetrical switching branches with which the evaluating unit and the switch are connected.

7. Control device according to claim 6, **characterised in that** each switching branch has a line (6, 7) for connection with the mains voltage.

8. Control device according to one of claims 1 to 7, **characterised in that** the switch is formed by a triac (5).

9. Control device according to one of claims 1 to 8, **characterised in that** the evaluating unit is formed by a microcontroller (14).

10. Control device according to claim 9, **characterised in that** a feed line is led from each resistor (10, 13) of a switching module to an input of the microcontroller (14).

11. Control device according to one of claims 1 to 10, **characterised in that** the mains voltage can be simultaneously applied to both windings (2, 3) of the alternating current motor so that the voltages at the windings (2, 3) are of the same phase.

12. Control device according to claim 11, **characterised in that** when the mains voltage is applied simultaneously to the windings (2, 3) parameter values of the alternating current motor can be changed.

13. Control device according to claim 12, **characterised in that** when mains voltage is applied simultaneously to the windings (2, 3) parameter values of the alternating current motor are erased.

14. Control device according to one of claims 1 to 13, **characterised in that** different states of a monitoring signal are derived in the evaluating unit from the sign of the phase difference of the voltages at the two windings (2, 3).

15. Control device according to one of claims 1 to 14, **characterised in that** the setting system is formed by a roller shutter, an awning, a roller door, a Venetian blind, an inside roller blind or a screen.

## Revendications

1. Dispositif de commande d'un moteur à courant alternatif utilisable dans deux sens de rotation pour un système d'actionnement, avec un commutateur pour la mise sous tension ou hors tension du moteur à courant alternatif, un sens de rotation pouvant être prescrit en appliquant une tension de secteur soit à un premier, soit à un deuxième enroulement du moteur à courant alternatif, **caractérisé en ce qu'**à chaque enroulement (2, 3) est associé un module de circuit avec une charge de base prédéfinie, la tension à un premier enroulement (2) auquel la tension de secteur est appliquée étant en phase avec cette tension de secteur, et la tension au deuxième enroulement (3) étant affectée d'une différence de phase dépendante du module de circuit par rapport à la tension au premier enroulement (2) si la tension de secteur n'est pas appliquée au deuxième enroulement (3), et que le sens de rotation du moteur à courant alternatif est déterminé dans une unité d'évaluation à partir de la différence de phase des tensions, indépendamment du fait que le commutateur soit amorcé ou non.

2. Dispositif de commande selon la revendication 1, **caractérisé en ce que** les deux enroulements (2, 3) du moteur à courant alternatif sont identiques.

3. Dispositif de commande selon l'une des revendications 1 ou 2, **caractérisé en ce que** les modules de circuit associés aux enroulements (2, 3) sont identiques.

4. Dispositif de commande selon l'une des revendications 1 à 3, **caractérisé en ce que** chaque module de circuit présente un condensateur de bloc d'alimentation (8, 11).

5. Dispositif de commande selon la revendication 4, **caractérisé en ce que** chaque module de circuit présente au moins une résistance (9 - 13) associée au condensateur de bloc d'alimentation (8, 11).

6. Dispositif de commande selon l'une des revendications 1 à 5, **caractérisé en ce que** les enroulements (2, 3) forment avec les modules de circuit deux branches de circuit symétriques auxquelles l'unité d'évaluation et le commutateur sont connectés.

7. Dispositif de commande selon la revendication 6, **caractérisé en ce que** chaque branche de circuit présente une ligne (6, 7) pour la connexion de la tension de secteur.

8. Dispositif de commande selon l'une des revendications 1 à 7, **caractérisé en ce que** le commutateur est formé par un triac (5).

9. Dispositif de commande selon l'une des revendications 1 à 8, **caractérisé en ce que** l'unité d'évaluation est formée par un microcontrôleur (14).

10. Dispositif de commande selon la revendication 9, **caractérisé en ce qu'**une ligne est amenée à une entrée du microcontrôleur (14) chaque fois depuis une résistance (10, 13) d'un module de circuit.

11. Dispositif de commande selon l'une des revendications 1 à 10, **caractérisé en ce que** la tension de secteur peut être appliquée en même temps aux deux enroulements (2, 3) du moteur à courant alternatif, de sorte que les tensions aux enroulements (2, 3) sont en phase.

12. Dispositif de commande selon la revendication 11, **caractérisé en ce que** quand la tension de secteur est appliquée en même temps aux enroulements (2, 3), des valeurs de paramètres du moteur à courant alternatif sont modifiables.

13. Dispositif de commande selon la revendication 12, **caractérisé en ce que** quand la tension de secteur est appliquée en même temps aux enroulements (2, 3), des valeurs de paramètres du moteur à courant alternatif sont effacées.

14. Dispositif de commande selon l'une des revendications 1 à 13, **caractérisé en ce que** dans l'unité dévaluation, différents états d'un signal de surveillance sont déduits du signe de la différence de phase des tensions aux deux enroulements (2, 3).

15. Dispositif de commande selon l'une des revendications 1 à 14, **caractérisé en ce que** le système d'actionnement est formé par un volet roulant, une marquise, une porte roulante, une jalousie, un store intérieur ou un écran.
